# EUROPÄISCHE PATENTSCHRIFT

(11) **EP 1 717 112 B1**
(45) Veröffentlichungstag und Bekanntmachung des Hinweises auf die Patenterteilung: **15.07.2009**
(21) Anmeldenummer: 05008572.9
(22) Anmeldetag: 19.04.2005
(51) Int. Cl.: B60R 21/239, B60R 21/276

(54) **Luftsackmodul**
Airbag module
Module de sac gonflable

(43) Veröffentlichungstag der Anmeldung: 02.11.2006
(73) Patentinhaber: Delphi Technologies, Inc., Troy, MI 48007 (US)
(72) Erfinder: Lutter, Gerhard, 16562 Bergfelde (DE)
(74) Vertreter: Denton, Michael John

(56) Entgegenhaltungen:
- EP-A- 0 982 198
- EP-A- 1 279 574
- US-A1- 2001 038 201
- US-A1- 2002 117 840
- US-A1- 2003 020 266
- US-A1- 2004 155 443
- US-A1- 2004 232 675
- US-B1- 6 814 372

## Beschreibung

Die Erfindung betrifft ein Luftsackmodul für Kraftfahrzeuge mit einem aufblasbaren Luftsack und einem Gasgenerator zum Aufblasen des Luftsacks. Die Erfindung betrifft außerdem ein Verfahren zum Betreiben eines derartigen Luftsackmoduls.

Bei einfachen Luftsackmodulen wird der Luftsack nach dem Auslösen des Gasgenerators schlagartig mit dem vom Gasgenerator erzeugten Gas gefüllt. Das Aufblasverhalten ist unveränderbar durch die Modulkonstruktion und insbesondere durch die Auslegung des Gasgenerators vorgegeben. Es sind mehrstufige Gasgeneratoren bekannt, bei denen die einzelnen Generatorstufen in einer vorgebbaren zeitlichen Abstimmung gezündet werden können, um das Aufblasverhalten des Gasgenerators und damit den zeitlichen Verlauf des Gasdrucks innerhalb des Luftsacks in Abhängigkeit von bestimmten Fahrzeugsituationen variieren zu können. Es ist außerdem bekannt, den Luftsack mit einer oder mehreren Abströmöffnungen zu versehen, um bei und vor allem nach dem Aufblasen des Luftsacks durch die Abströmmöglichkeit den zeitlichen Verlauf der für den betreffenden Fahrzeuginsassen relevanten Steifigkeit oder Härte des Luftsacks zu beeinflussen. In diesem Zusammenhang wurde auch bereits vorgeschlagen, Abströmöffnungen des Luftsacks in Abhängigkeit von der Fahrzeugsituation entweder zu öffnen oder verschlossen zu halten.

An Luftsackmodule werden hinsichtlich ihrer Adaptivität, d.h. ihrer Fähigkeit, überhaupt und vor allem automatisch auf unterschiedliche Fahrzeugsituationen reagieren zu können, zunehmend höhere Anforderungen gestellt. Diese zum Teil in nationalen Vorschriften definierten Anforderungen beziehen sich insbesondere auf den Gasdruck innerhalb des Luftsacks sowie auf dessen Abströmgeometrie.

Die eingangs erwähnten bekannten Maßnahmen können diesen Anforderungen nur bedingt gerecht werden und sind außerdem mit einem hohen konstruktiven Aufwand und damit erheblichen Mehrkosten verbunden.

EP-A-0 982 198 offenbart ein Luftsackmodul mit einem Gasverteiler, der mindestens ein Gleitventil umfasst. Durch ein Aktivieren eines Aktuators kann das mindestens eine Gleitventil verschoben werden, um eine Gasströmungsrichtung so umzulenken, dass das Gas nicht in den Luftsack strömt, sondern in die Umgebung entweicht.

In US 2004/232675 A1 wird eine Luftsackanordnung mit einem Gehäuse offenbart, das einen Gasgenerator umfasst und eine Gehäuseauslassöffnung sowie eine Durchgangsöffnung zum Luftsack aufweist. Eine Schließvorrichtung, die eine geöffnete Stellung, bei welcher die Gehäuseauslassöffnung geöffnet und die Durchgangsöffnung zumindest teilweise geschlossen ist, und eine geschlossene Stellung umfasst, bei welcher die Gehäuseauslassöffnung geschlossen und die Durchgangsöffnung geöffnet ist, wird durch eine Verrriegelung in der geöffneten Stellung verriegelt. Die Verriegelung kann gelöst werden, wodurch die Schließvorrichtung in die geschlossene Stellung überführt wird.

US-B1-6 814 372 offenbart ein Verfahren und eine Vorrichtung zur Entlüftung einer aufblasbaren Rückhaltevorrichtung. Die Entlüftungsvorrichtung umfasst eine Tür in einem Aufblasbehälter, die von einem Aktuator selektiv geöffnet werden kann, um einen Luftsack zu entlüften.

EP-A-1 279 574 offenbart eine Luftsackvorrichtung mit variablen Entlüftungsöffnungen, welche durch Schließelemente verschlossen sind. Zum Entlüften eines Luftsacks können Schieberelemente aktiviert werden, welche die Schließelemente verschieben, so dass Gas durch die Entlüftungsöffnungen entweichen kann.

Im nächstliegenden Stand der Technik US 2002/117 840 A1 wird eine Luftsackspanngurtlösebaugruppe offenbart, bei der ein Entlüftungsblockadeelement selektiv verschoben werden kann, um eine Entlüftungsöffnung zu schließen und Spanngurte zu lösen, die eine Ausdehnung des Luftsacks einschränken. Durch das Schließen der Entlüftungsöffnung gelangt bei einer Aktivierung des Luftsacks mehr Gas in den Luftsack, der sich durch das gleichzeitige Lösen der Spanngurte weiter entfalten kann.

US 2001/038201 A1 offenbart eine adaptive Entlüftung für ein Luftsackmodul, bei der ein zwischen einem in einem Gehäuse untergebrachten Gasgenerator und dem Luftsack angeordneter Schieber selektiv verschoben werden kann, um die Gasmenge zu verändern, die in den Luftsack gelangt. Alternativ kann ein Schieber zum selektiven Öffnen von Entlüftungsöffnungen in dem Gehäuse vorgesehen sein.

Aufgabe der Erfindung ist es, eine Möglichkeit zu schaffen, bei Luftsackmodulen der eingangs genannten Art die adaptiven Fähigkeiten auf möglichst einfache und kostengünstige Weise so zu verbessern, dass die jetzt und in Zukunft diesbezüglich gestellten Anforderungen erfüllt werden können.

Die Lösung dieser Aufgabe erfolgt durch die Merkmale der unabhängigen Ansprüche.

Erfindungsgemäß ist das Luftsackmodul mit einem aktivierbaren Aktuator versehen, der mit einer Bypassöffnung des Moduls und einer Abströmöffnung des Luftsacks derart zusammenwirkt, dass nach dem Aktivieren des Aktuators sowohl das Aufblasverhalten als auch das Abströmverhalten des Luftsacks gegenüber einem Betrieb mit passiv bleibendem Aktuator verändert ist.

Die Erfindung beruht auf dem Gedanken, zusätzlich zu dem Gasgenerator einen Aktuator vorzusehen, mit dem sowohl auf den Gasgenerator als auch auf den Luftsack selbst Einfluss genommen werden kann. Dabei wird zum einen das - im Folgenden so bezeichnete - Aufblas- oder Entleerungsverhalten des Gasgenerators beeinflusst, indem mit der Bypassöffnung für das Gas eine steuerbare Möglichkeit geschaffen wird, teilweise unter Umgehung des Luftsacks zu entweichen. Zum anderen kann durch die steuerbare Abströmöffnung des Luftsacks dessen Abströmverhalten beeinflusst werden. Wenn hier von einer Beeinflussung des Gasgenerators die Rede ist, dann ist damit eine Einflussnahme auf dessen Wirkung beim Aufblasen des Luftsacks, d.h. auf die Aufblaswirkung des Gasgenerators gemeint. Insbesondere wird erfindungsgemäß nicht der Gasgenerator in seiner Eigenschaft als konstruktives Bauteil des Moduls beeinflusst oder manipuliert, sondern es wird auf den vom Gasgenerator gelieferten Gasstrom Einfluss genommen.

Folglich können erfindungsgemäß mit einer einzigen Zusatzeinheit in Form des Aktuators zwei Parameter des Luftsackmoduls, nämlich das Aufblasverhalten und das Abströmverhalten des Luftsacks, beeinflusst werden, wodurch der Konstruktionsaufwand, die Anzahl der Bauteile, die Komplexität des Moduls und somit die Herstellungskosten bezogen auf den hohen Funktionalitätsgrad des Luftsackmoduls gering gehalten werden können. Auf den Luftsack kann also sowohl beim Aufblasen als auch beim Entleeren Einfluss genommen werden.

Ein besonderer Vorteil der Erfindung ist, dass aufgrund des zusätzlichen Aktuators lediglich ein vergleichsweise kostengünstiger einstufiger Gasgenerator ausreicht, um zusammen mit dem Aktuator das Leistungsbild eines herkömmlichen mehrstufigen Gasgenerators darzustellen. Die Erfindung bietet also effektiv eine Mehrstufigkeit bei wesentlich geringeren Herstellungskosten.

Vorzugsweise handelt es sich bei der Bypassöffnung nicht um ein konstruktives Merkmal des Gasgenerators, sondern um eines des Luftsackmoduls als Ganzes betrachtet.

Bevorzugt ist der Aktuator derart ausgelegt, dass er unabhängig von dem Auslösen des Gasgenerators aktiviert werden kann. Die zeitliche Abstimmung zwischen Generator-Auslösung und Aktuator-Aktivierung kann daher adaptiv zur Anpassung an eine jeweilige Fahrzeugsituation erfolgen.

Durch die Verbindung eines einzigen Aktuators sowohl mit einer Bypassöffnung des Moduls als auch mit einer Abströmöffnung des Luftsacks ergeben sich vielfältige Steuerungsmöglichkeiten. So bleibt beispielsweise bei einer gegenüber dem Auslösen des Gasgenerators verspäteten Aktivierung des Aktuators der Einfluss auf die Bypassöffnung folgenlos, wenn bei Aktivierung des Aktuators der Gasgenerator bereits mehr oder weniger vollständig entleert ist. Eine aufgrund der Aktivierung des Aktuators erfolgende Veränderung des Abströmverhaltens des Luftsacks hat dagegen sehr wohl einen Einfluss auf die Wirkung des Luftsacks für den betreffenden Fahrzeuginsassen. So kann dieses "späte" Aktivierungsszenario insbesondere im Fall eines weiblichen Fahrzeuginsassen gewählt werden (so genannter "5% female occupant").

Weitere bevorzugte Ausführungsformen der Erfindung sind in den abhängigen Ansprüchen, der Beschreibung sowie der Zeichnung angegeben.

Gemäß einem Ausführungsbeispiel der Erfindung sind mittels des Aktuators das Aufblasverhalten des Gasgenerators und das Abströmverhalten des Luftsacks gleichzeitig beeinflussbar. Es ist aber prinzipiell auch möglich, eine zeitliche Verzögerung zu integrieren, so dass auf die Bypassöffnung einerseits und die Abströmöffnung andererseits mit zeitlichem Abstand Einfluss genommen werden kann, obwohl lediglich ein einziger Aktuator vorgesehen ist.

Des Weiteren ist vorzugsweise vorgesehen, dass mittels des Aktuators die Bypassöffnung und die Abströmöffnung aus einem geschlossenen Zustand in einen freigegebenen Zustand überführbar sind. Die Bypassöffnung und die Abströmöffnung werden hierbei also erst dann wirksam, wenn der Aktuator aktiviert wird. Bei passiv bleibendem Aktuator bleiben die Bypassöffnung und die Abströmöffnung geschlossen.

Vorzugsweise ist für die Bypassöffnung ein Verschlusselement vorgesehen, das mittels des Aktuators aus einem die Bypassöffnung verschließenden Zustand in einen Freigabezustand überführbar ist, in welchem durch Auslösen des Gasgenerators erzeugtes Gas unter Überwindung des Verschlusselementes über die Bypassöffnung entweichen kann.

Bei dem Verschlusselement kann es sich insbesondere um eine schwenkbare Klappe handeln, die in einem verriegelten Zustand die Bypassöffnung abdeckt und mittels des Aktuators entriegelt werden kann, so dass das bei Auslösung des Gasgenerators erzeugte Gas die entriegelte Klappe aufschwenken kann, wodurch ein Teil des Gases über die Bypassöffnung entweicht und nicht in den Luftsack gelangt.

Was den Luftsack anbetrifft, so ist bevorzugt vorgesehen, dass die Abströmöffnung des Luftsacks im geschlossenen Zustand durch einen zusammengefalteten Materialabschnitt und/oder durch einen Abschnitt des Moduls verschlossen ist, wobei vorzugsweise der Materialabschnitt ein Bestandteil der Luftsackhülle ist. Vorzugsweise ist für den verschlossenen Zustand der Abströmöffnung ausschließlich das Zusammenfalten des Materialabschnitts verantwortlich, d.h. die Abströmöffnung ist nicht etwa z.B. mit aufreißbaren Nähten oder Ähnlichem versehen, wobei dies grundsätzlich aber alternativ ebenfalls möglich wäre. Bevorzugt ist der Luftsack bzw. der Materialabschnitt, in welchem die Abströmöffnung ausgebildet ist, derart zusammengefaltet, dass im gefalteten Zustand kein Gas über die Abströmöffnung aus dem Luftsack entweichen kann. Die Faltung zumindest des Materialabschnitts, in welchem die Abströmöffnung ausgebildet ist, kann grundsätzlich beliebig sein, und zwar regelmäßig oder unregelmäßig. Insbesondere kann der Materialabschnitt auch zusammengeknautscht oder -geknüllt sein.

Dabei ist vorzugsweise vorgesehen, dass der Materialabschnitt zur Freigabe der Abströmöffnung entfaltbar ist, insbesondere durch den sich beim Aufblasen des Luftsacks erhöhenden Gasdruck innerhalb des Luftsacks.

In einer bevorzugten praktischen Ausgestaltung ist die Abströmöffnung des Luftsacks von einem schlauch-, röhren-, rüssel- oder kanalartigen Materialabschnitt gebildet, der an dem einen Ende mit dem Luftsack in Verbindung steht und an dem anderen Ende offen ist. Der Materialabschnitt kann an die eigentliche Luftsackhülle angenäht sein oder einen integralen Bestandteil der Luftsackhülle bilden.

Des Weiteren ist bevorzugt vorgesehen, dass der Materialabschnitt zur Verankerung am Modul ausgebildet ist, insbesondere mittels eines bevorzugt lang gestreckten, vorzugsweise als Band oder Kordel ausgebildeten Verankerungselementes. Die Verankerung ist vorzugsweise derart ausgelegt, dass sie durch Aktivieren des Aktuators lösbar ist.

Ferner ist bevorzugt vorgesehen, dass der Materialabschnitt und dessen Verankerung derart ausgebildet sind, dass eine Entfaltung des Materialabschnitts nur bei gelöster Verankerung möglich ist.

Gemäß einem weiteren bevorzugten Ausführungsbeispiel der Erfindung ist ein durch Aktivieren des Aktuators bewegliches Betätigungs- oder Steuerorgan vorgesehen, das sowohl mit der Bypassöffnung als auch mit der Abströmöffnung des Luftsacks zusammenwirkt.

Dabei kann der Aktuator eine Kolben-/Zylinder-Anordnung umfassen, wobei aber auch andere Ausgestaltungen möglich sind. So kann der Aktuator z.B. auf einem beliebigen geeigneten elektrischen, magnetischen oder allgemein elektro-mechanischen Aktuator-Prinzip basieren.

Wenn der Aktuator eine Kolben-/Zylinder-Anordnung umfasst, dann ist bevorzugt ein zündbarer Treibsatz vorgesehen, der durch Aktivieren des Aktuators im Zylinder eine Gasexpansion zum Bewegen des Kolbens erzeugt.

Vorzugsweise ist der durch Aktivieren des Aktuators bewegbare Kolben als ein Betätigungs- oder Steuerorgan sowohl für die Bypassöffnung als auch für die Abströmöffnung des Luftsacks ausgebildet. Der Kolben kann aber auch über ein zusätzliches Betätigungsorgan mit der Bypassöffnung bzw. der Abströmöffnung zusammenwirken.

Um auf unterschiedliche Fahrzeugsituationen reagieren zu können, ist vorzugsweise der Aktuator wahlweise vor, mit oder nach dem Auslösen des Gasgenerators aktivierbar. Insbesondere ist der Aktuator unabhängig vom Gasgenerator ansteuerbar.

Dabei kann vorgesehen sein, dass der Aktuator automatisch in einer situationsabhängigen zeitlichen Abstimmung mit dem Auslösen des Gasgenerators aktivierbar ist. Die die Aktivierung des Aktuators bestimmende Fahrzeugsituation kann automatisch über eine Fahrzeugsensorik ermittelt werden.

Die Lösung der Aufgabe erfolgt außerdem durch ein Verfahren zum Betreiben eines Luftsackmoduls für Kraftfahrzeuge, bei dem der Aktuator vor, mit oder nach dem Auslösen des Gasgenerators aktiviert wird, um sowohl das Aufblasverhalten als auch das Abströmverhalten des Luftsacks gegenüber einem Betrieb mit passiv bleibendem Aktuator zu verändern.

Die Erfindung wird im Folgenden beispielhaft unter Bezugnahme auf die Zeichnung beschrieben. Es zeigen:
- Fig. 1: teilweise ein erfindungsgemäßes Luftsackmodul mit noch nicht aktiviertem Aktuator,
- Fig. 2: das Luftsackmodul von Fig. 1 mit aktiviertem Aktuator, und
- Fig. 3 und 4: schematisch verschiedene Ansichten eines Aktuators für ein erfindungsgemäßes Luftsackmodul.

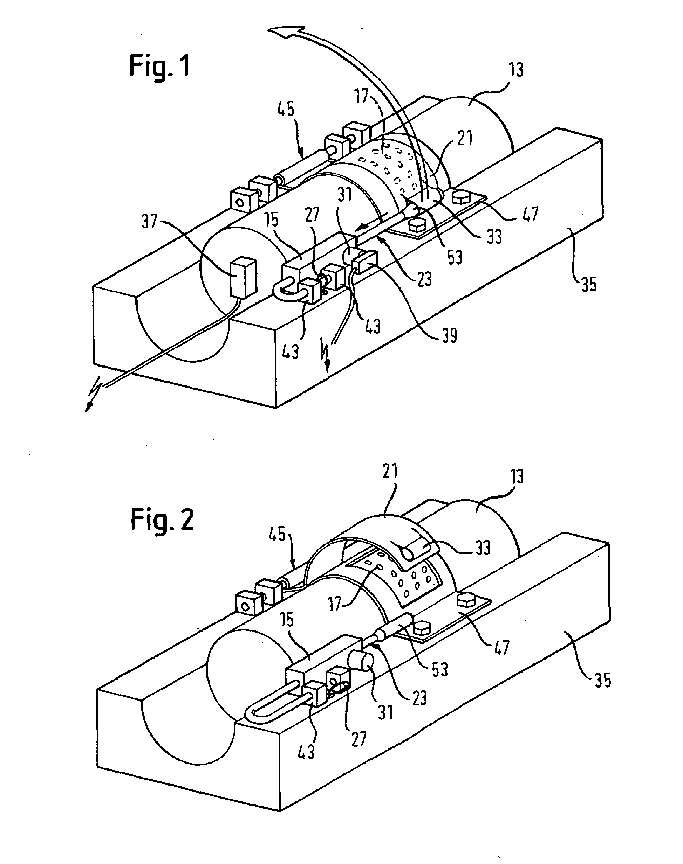

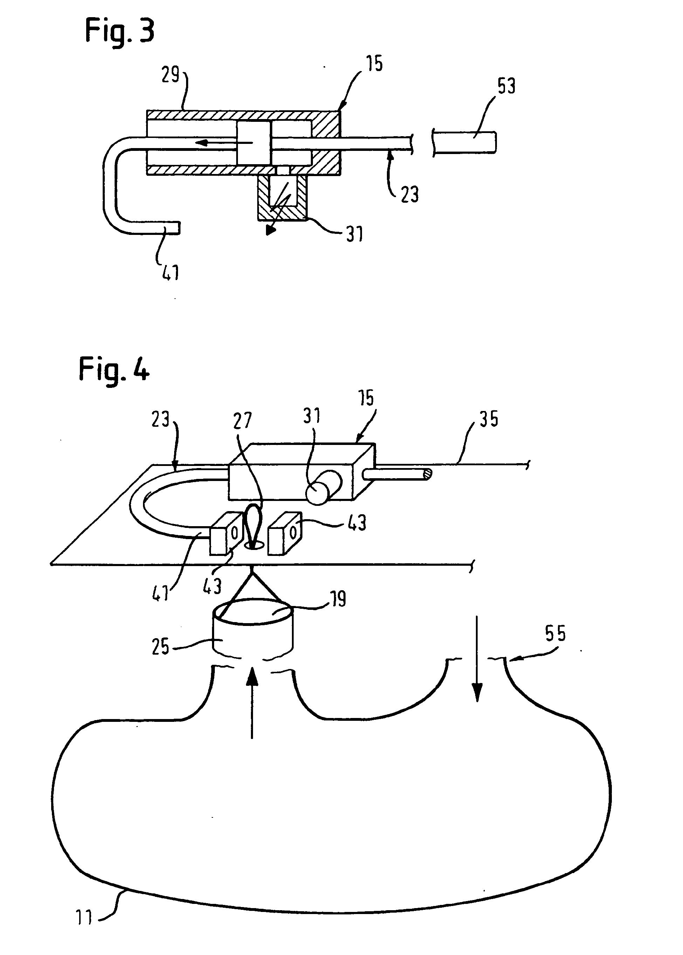

Die Fig. 1 und 2 zeigen die Rückseite eines nur teilweise dargestellten Gehäuses 35 eines erimdungsgemäßen Beifahrer-Luftsackmoduls. Ein einziger einstufiger Gasgenerator 13 liegt in einer rinnenförmigen Vertiefung und ist mittels einer schellenartigen Halterung 47, die mit dem Gehäuse 35 fest verschraubt ist, am Modul befestigt. Der hier nicht dargestellte Luftsack 11 (hierzu später Fig. 4) befindet sich in Fig. 1 und 2 unterhalb des Gasgenerators 13 und ist von diesem durch den Boden des Gehäuses 35 räumlich getrennt.

Ebenfalls an der Gehäuseunterseite befestigt ist ein Aktuator 15, der eine Kolben-/Zylinder-Anordnung mit einem Kolben 23 und einem Zylinder 29 (Fig. 3) umfasst. Der Kolben 23 erstreckt sich durch das Zylindergehäuse hindurch. Der eine freie Endbereich der Kolbenstange dient als mit dem Gasgenerator 13 zusammenwirkender Verriegelungsabschnitt 53, während der andere freie Endbereich, der sich an einen U-förmigen Abschnitt anschließt und in Lagerböcken 43 geführt ist, als ein Verankerungsabschnitt 41 mit dem Luftsack 11 zusammenwirkt. Hierauf wird nachstehend näher eingegangen.

Elektrische Zündeinrichtungen 37, 39 zum Auslösen des Gasgenerators 13 bzw. eines auch als Zündpille bezeichneten Treibsatzes 31 des Aktuators 15 sind in Fig. 2 der Einfachheit halber weggelassen. Die Zündpille 31 dient zur Erzeugung einer Gasexpansion im Zylinder 29, um nach dem Auslösen des Aktuators 15 den Kolben 23 schlagartig aus einer Ausgangsstellung nach vorn in Fig. 1 und 2 bzw. nach links in Fig. 3 zu treiben.

Der Gasgenerator 13 ist derart ausgebildet, dass nach dem Auslösen das Gas danach strebt, sowohl nach unten über den Luftsackmund 55 in den Luftsack 11 (Fig. 4) zu strömen als auch nach oben auszutreten. An letzterem ist das Gas allerdings bei passivem Aktuator 15 gemäß Fig. 1 durch eine Verschlussklappe 21 gehindert, die eine Bypassöffnung 17 des Luftsackmoduls verschließt. Im Bereich der Bypassöffnung 17, die aus einer Vielzahl von Einzelöffnungen bestehen kann, ist die Halteschelle 47 ausgespart. Im Rahmen dieser Anmeldung kann die Aussparung der Halteschelle 47 als Bypassöffnung im Sinne der Erfindung oder kann die Halteschelle 47 als ein Bestandteil des Gasgenerators 13 betrachtet werden.

Die Verschlussklappe 21 ist an einem Ende mittels einer Gelenkanordnung 45 mit dem Gehäuse 35 gelenkig verbunden und an ihrem anderen Ende mit einer Verriegelungslasche 33 versehen, in die der Verriegelungsabschnitt 53 des Kolbens 23 eingreift, wenn sich der Aktuator 15 in der noch nicht aktivierten Ausgangsstellung gemäß Fig. 1 befindet. In dieser Stellung kann die Klappe 21 nicht aufgeschwenkt und kann mit dem Gasgenerator 13 erzeugtes Gas nicht über die Bypassöffnung 17 austreten. Bei Auslösung des Gasgenerators 13 und passiv bleibendem Aktuator 15 strömt somit das Gas vollständig in den Luftsack 11.

Wird der Aktuator 15 durch Zünden des Treibsatzes 31 aktiviert, bevor der Gasgenerator 13 vollständig leergeblasen hat, tritt ein Teil der erzeugten Gasmenge über die Bypassöffnung 17 aus und umgeht somit den Luftsack 11. Dabei wird die entriegelte Verschlussklappe 21 durch das ausströmende Gas aufgeschwenkt, wie es in Fig. 1 durch den großen Pfeil angedeutet und in Fig. 2 dargestellt ist, wo die Klappe 21 leicht angehoben ist, so dass die Bypassöffnung 17 freigegeben wird.

Gleichzeitig wirkt der Aktuator 15 auch mit dem Luftsack 11 zusammen (Fig. 4). Hierzu weist der Luftsack 11 einen schlauchförmigen Materialabschnitt 25 auf, der an seinem freien Ende offen ist und somit eine Abströmöffnung 19 des Luftsacks 11 bildet. Bei zusammengefaltetem Luftsack 11 ist dieser rüsselartige Abströmschlauch 25 ebenfalls zusammengefaltet bzw. in den Luftsack 11 hineingedrückt, wobei keine regelmäßige Faltung erforderlich ist, sondern der Abströmschlauch 25 auch zusammengeknautscht oder -geknüllt sein kann. Es kommt lediglich darauf an, dass bei zusammengefaltetem, noch nicht aufgeblasenem Luftsack 11 der Schlauch 25 bzw. dessen Austrittsöffnung verschlossen ist und Gas aus dem Luftsackinneren nur entweichen kann, wenn sich der Schlauch 25 entfalten kann. Dieses Entfalten erfolgt während des Aufblasens des Luftsacks 11 durch den zunehmenden Gasdruck im Inneren des Luftsacks 11, der Abströmschlauch 25 wird gewissermaßen ebenfalls "aufgeblasen". Die Entfaltungscharakteristik des Abströmschlauches 25 sowohl in zeitlicher als auch räumlicher Hinsicht kann durch entsprechende Ausgestaltung des Schlauches 25, dessen Faltung sowie dessen Anordnung am oder im Luftsack 11 vorgegeben werden.

Erfindungsgemäß ist nun aber der Abströmschlauch 25 an einem Entfalten gehindert, wenn der Aktuator 15 nicht aktiviert wird, damit wahlweise ein Abströmen von Gas aus dem aufgeblasenen bzw. sich aufblasenden Luftsack 11 entweder unterbunden oder zugelassen werden kann. Hierzu ist der Abströmschlauch 25 mit einem als Fangkordel oder -band ausgebildeten Verankerungselement 27 versehen, das an seinem freien Ende eine Schlaufe bildet und mit dieser Schlaufe durch eine Öffnung im Gehäuseboden hindurch geführt ist.

Bei noch nicht aktiviertem Aktuator 15 ist der Verankerungsabschnitt 41 des Kolbens 23 durch die Schlaufe der Fangkordel 27 hindurch gesteckt. Hierdurch ist die Fangkordel 27 - und damit der freie Endbereich des Abströmschlauches 25 (Fig. 4) - durch den sich zwischen den Lagerböcken 43 erstreckenden Teil des Verankerungsabschnitts 41 am Gehäuseboden festgehalten. Dieses Festhalten hat zur Folge, dass sich der Abströmschlauch 25 trotz des sich erhöhenden Gasdruckes innerhalb des Luftsacks 11 während des Aufblasvorgangs nicht entfalten kann, so dass die Abströmöffnung 19 verschlossen bleibt.

Wird der Aktuator 19 aktiviert, so gibt der Verankerungsabschnitt 41 die Schlaufe der Fangkordel 27 frei. Der Abströmschlauch 25 kann sich hierdurch beim Aufblasen des Luftsacks 11 entfalten, wodurch die Abströmöffnung 19 freigegeben wird.

Wie im Einleitungsteil bereits erwähnt, können vielfältige Szenarien realisiert werden, indem der Zeitpunkt der Aktivierung des Aktuators 15 auf den Zeitpunkt der Auslösung des Gasgenerators 13 abgestimmt wird. Der Aktuator 15 kann unabhängig vom Gasgenerator 13 und somit wahlweise vor, mit oder nach der Auslösung des Gasgenerators 13 aktiviert werden.

Die Freigabe der Bypassöffnung 17 kann dessen Aufblasverhalten verändern, während die Freigabe der Abströmöffnung 19 das Abströmverhalten des Luftsacks 11 beeinflussen kann. Ob überhaupt und, falls ja, in welchem Ausmaß jeweils eine Veränderung bzw. Einflussnahme erfolgt, hängt - neben z.B. der Ausgestaltung der Bypassöffnung 17 und der Abströmöffnung 19 - insbesondere von der zeitlichen Abstimmung zwischen Gasgenerator-Auslösung und Aktuator-Aktivierung ab. Diese zeitliche Abstimmung bietet erfindungsgemäß die vielfältigen Möglichkeiten zur Ausgestaltung der gewünschten adaptiven Fähigkeiten des Luftsackmoduls.

### Bezugszeichenliste

- 11: Luftsack
- 13: Gasgenerator
- 15: Aktuator
- 17: Bypassöffnung
- 19: Abströmöffnung
- 21: Verschlusselement, Klappe
- 23: Betätigungs- oder Steuerorgan, Kolben, Riegel
- 25: Materialabschnitt, Abströmschlauch
- 27: Verankerungsabschnitt, Fangkordel
- 29: Zylinder
- 31: Treibsatz, Zündpille
- 33: Verriegelungslasche
- 35: Gehäuse
- 37: Zündeinrichtung
- 39: Zündeinrichtung
- 41: Verankerungsabschnitt
- 43: Lagerbock
- 45: Gelenkanordnung
- 47: Halterung, Halteschelle
- 53: Verriegelungsabschnitt
- 55: Luftsackmund

## Patentansprüche

1. Luftsackmodul für Kraftfahrzeuge mit
einem durch einen Luftsackmund (55) aufblasbaren Luftsack (11), einem Gasgenerator (13) zum Aufblasen des Luftsacks (11) und einem aktivierbaren Aktuator (15), der zum einen mit einer Bypassöffnung (17) des Moduls und zum anderen mit einer Abströmöffnung (19) des Luftsacks (11) derart zusammenwirkt, dass nach dem Aktivieren des Aktuators (15) sowohl mittels der Bypassöffnung (17) das Aufblasverhalten als auch mittels der Abströmöffnung (19) das Abströmverhalten des Luftsacks (11) gegenüber einem Betrieb mit passiv bleibendem Aktuator (15) verändert ist, wobei die Abströmöffnung (19) sowie der davon beabstandet angeordnete Luftsackmund (55) des Luftsacks (11) in der Luftsackhülle ausgebildet sind.

2. Luftsackmodul nach Anspruch 1,
**dadurch gekennzeichnet,**
**dass** mittels des Aktuators (15) die Bypassöffnung (17) und die Abströmöffnung (19) aus einem geschlossenen Zustand in einen freigegebenen Zustand überführbar sind.

3. Luftsackmodul nach Anspruch 1 oder 2,
**dadurch gekennzeichnet,**
**dass** für die Bypassöffnung (17) ein Verschlusselement (21) vorgesehen ist, das mittels des Aktuators (15) aus einem die Bypassöffnung (17) verschließenden Zustand in einen Freigabezustand überführbar ist, in welchem durch Auslösen des Gasgenerators (13) erzeugtes Gas unter Überwindung des Verschlusselementes (21) über die Bypassöffnung (17) entweichen kann.

4. Luftsackmodul nach Anspruch 3,
**dadurch gekennzeichnet,**
**dass** das Verschlusselement (21) beweglich gelagert und nach Freigabe durch den Aktuator (15) zu einer Öffnungsbewegung in der Lage ist, wobei vorzugsweise die Öffnungsbewegung eine Schwenk-, Dreh- oder Schiebebewegung umfasst, oder dass das Verschlusselement (21) im Freigabezustand vollständig vom Modul gelöst ist.

5. Luftsackmodul nach Anspruch 3 oder 4,
**dadurch gekennzeichnet,**
**dass** das Verschlusselement (21) in einem die Bypassöffnung (17) verschließenden Zustand mittels eines Riegels an einer Öffnungsbewegung gehindert ist, wobei der Riegel (23) mittels des Aktuators (15) aus einer Verriegelungsstellung in eine das Verschlusselement (21) freigebende Entriegelungsstellung bewegbar ist.

6. Luftsackmodul nach einem der vorhergehenden Ansprüche,
**dadurch gekennzeichnet,**
**dass** die Abströmöffnung (19) des Luftsacks (11) im geschlossenen Zustand durch einen zusammengefalteten Materialabschnitt (25) und/oder durch einen Abschnitt des Moduls verschlossen ist, wobei vorzugsweise der Materialabschnitt (25) ein Bestandteil der Luftsackhülle ist.

7. Luftsackmodul nach Anspruch 6,
**dadurch gekennzeichnet,**
**dass** der Materialabschnitt (25) zur Freigabe der Abströmöffnung (19) entfaltbar ist, insbesondere durch den sich beim Aufblasen des Luftsacks (11) erhöhenden Gasdruck innerhalb des Luftsacks (11).

8. Luftsackmodul nach einem der vorhergehenden Ansprüche,
**dadurch gekennzeichnet,**
**dass** die Abströmöffnung (19) des Luftsacks (11) von einem schlauch-, rüssel- oder kanalartigen Materialabschnitt (25) gebildet ist, der an dem einen Ende mit dem Luftsack (11) in Verbindung steht und an dem anderen Ende offen ist.

9. Luftsackmodul nach einem der Ansprüche 6 bis 8,
**dadurch gekennzeichnet,**
**dass** der Materialabschnitt (25) zur Verankerung am Modul ausgebildet ist, insbesondere mittels eines bevorzugt lang gestreckten, vorzugsweise als Band oder Kordel ausgebildeten Verankerungselementes (27).

10. Luftsackmodul nach Anspruch 9,
**dadurch gekennzeichnet,**
**dass** die Verankerung des Materialabschnitts (25) durch Aktivieren des Aktuators (15) lösbar ist.

11. Luftsackmodul nach einem der Ansprüche 6 bis 10,
**dadurch gekennzeichnet,**
**dass** der Materialabschnitt (25) und dessen Verankerung derart ausgebildet sind, dass eine Entfaltung des Materialabschnitts (25) zur Freigabe der Abströmöffnung (19) nur bei gelöster Verankerung möglich ist.

12. Luftsackmodul nach einem der vorhergehenden Ansprüche,
**dadurch gekennzeichnet,**
**dass** ein durch Aktivieren des Aktuators (15) bewegliches Betätigungs- oder Steuerorgan (23) vorgesehen ist, das sowohl mit der Bypassöffnung (17) als auch mit der Abströmöffnung (19) des Luftsacks (11) zusammenwirkt.

13. Luftsackmodul nach einem der vorhergehenden Ansprüche,
**dadurch gekennzeichnet,**
**dass** der Aktuator (15) eine Kolben-/Zylinder-Anordnung (23, 29) umfasst.

14. Luftsackmodul nach Anspruch 13,
**dadurch gekennzeichnet,**
**dass** für die Kolben-/Zylinder-Anordnung (23, 29) ein zündbarer Treibsatz (31) vorgesehen ist, der durch Aktivieren des Aktuators (15) im Zylinder (29) eine Gasexpansion zum Bewegen des Kolbens (23) erzeugt.

15. Luftsackmodul nach Anspruch 13 oder 14,
**dadurch gekennzeichnet,**
**dass** der durch Aktivieren des Aktuators (15) bewegbare Kolben (23) als ein Betätigungs- oder Steuerorgan sowohl für die Bypassöffnung (17) als auch für die Abströmöffnung (19) des Luftsacks (11) ausgebildet ist oder über ein zusätzliches Betätigungsorgan mit der Bypassöffnung (17) und der Abströmöffnung (19) zusammenwirkt.

16. Luftsackmodul nach einem der vorhergehenden Ansprüche,
**dadurch gekennzeichnet,**
**dass** der Aktuator (15) wahlweise vor, mit oder nach dem Auslösen des Gasgenerators (13) aktivierbar ist.

17. Luftsackmodul nach einem der vorhergehenden Ansprüche,
**dadurch gekennzeichnet,**
**dass** der Aktuator (15) unabhängig vom Gasgenerator (13) ansteuerbar ist.

18. Luftsackmodul nach einem der vorhergehenden Ansprüche,
**dadurch gekennzeichnet,**
**dass** der Aktuator (15) automatisch in einer situationsabhängigen zeitlichen Abstimmung mit dem Auslösen des Gasgenerators (13) aktivierbar ist.

19. Luftsackmodul nach Anspruch 18,
**dadurch gekennzeichnet,**
**dass** die die Aktivierung des Aktuators (15) bestimmende Fahrzeugsituation automatisch über eine Fahrzeugsensorik ermittelbar ist.

20. Luftsackmodul nach einem der vorhergehenden Ansprüche,
**dadurch gekennzeichnet,**
**dass** mittels des Aktuators (15) das Aufblasverhalten und das Abströmverhalten des Luftsacks (11) gleichzeitig beeinflussbar sind.

21. Verfahren zum Betreiben eines Luftsackmoduls für Kraftfahrzeuge, das einen durch einen in der Luftsackhülle ausgebildeten Luftsackmund (55) aufblasbaren Luftsack (11), einen Gasgenerator (13) zum Aufblasen des Luftsacks (11) und einen aktivierbaren Aktuator (15) umfasst, der mit einer Bypassöffnung (17) des Moduls und einer in der Luftsackhülle ausgebildeten, von dem Luftsackmund (55) beabstandet angeordneten Abströmöffnung (19) des Luftsacks (11) zusammenwirkt,
bei dem der Aktuator (15) wahlweise vor, mit oder nach dem Auslösen des Gasgenerators (13) aktiviert wird, um sowohl mittels der Bypassöffnung (17) das Aufblasverhalten als auch mittels der Abströmöffnung (19) das Abströmverhalten des Luftsacks (11) gegenüber einem Betrieb mit passiv bleibendem Aktuator (15) zu verändern.

22. Verfahren nach Anspruch 21,
**dadurch gekennzeichnet,**
**dass** der Aktuator (15) automatisch in einer von einer jeweiligen Fahrzeugsituation abhängigen zeitlichen Abstimmung mit dem Auslösen des Gasgenerators (13) aktiviert wird.

23. Verfahren nach Anspruch 22,
**dadurch gekennzeichnet,**
**dass** die Fahrzeugsituation, durch welche der Zeitpunkt der Aktivierung des Aktuators (15) bezogen auf den Zeitpunkt der Auslösung des Gasgenerators (13) bestimmt wird, automatisch mittels einer Fahrzeugsensorik ermittelt wird.

24. Verfahren nach einem der Ansprüche 21 bis 23,
**dadurch gekennzeichnet,**
**dass** das Aufblasverhalten und das Abströmverhalten des Luftsacks (11) gleichzeitig verändert werden.

25. Verfahren nach einem der Ansprüche 21 bis 24,
**dadurch gekennzeichnet,**
**dass** durch Aktivieren des Aktuators (15) die Bypassöffnung (17) des Moduls und die Abströmöffnung (19) des Luftsacks (11) freigegeben werden.

## Claims

1. Air bag module for automotive vehicles, comprising
an air bag (11) inflatable through an air bag opening (55),
a gas generator (13) for inflating the air bag (11), and
an actuable actuator (15) cooperating on the one hand with a bypass opening (17) of the module and on the other hand with a deflation opening (19) of the air bag (11) such that after activating the actuator (15) both the inflating behavior by means of the bypass opening (17) and the deflating behavior by means of the deflation opening (19) is changed compared to an operation with an actuator (15) remaining passive, wherein both the deflation opening (19) and the air bag opening (55) spaced apart thereof of the air bag (11) are provided in the air bag covering.

2. Air bag module according to claim 1,
**characterized in that**
the bypass opening (17) and the deflation opening (19) are transferable from a closed state into a released state by means of the actuator (15).

3. Air bag module according to claim 1 or 2,
**characterized in that**
a closure element (21) is provided for the bypass opening (17), which is transferable by means of the actuator (15) from a state closing the bypass opening (17) into a release state, in which gas generated by actuating the gas generator (13) can escape, overcoming the closure element (21), through the bypass opening (17).

4. Air bag module according to claim 3,
**characterized in that**
the closure element (21) is mounted movable and is operable for an opening movement upon release by the actuator (15), wherein the opening movement preferably includes a swiveling, a rotational or a sliding movement, or that the closure element (21) is completely detached from the module in the release state.

5. Air bag module according to claim 3 or 4,
**characterized in that**
the closure element (21) is hindered from an opening movement by means of a latch in a state closing the bypass opening (17), wherein the latch (23) is movable by means of the actuator (15) from a locking position into an unlocking position releasing the closure element (21).

6. Air bag module according to one of the preceding claims,
**characterized in that**
the deflation opening (19) of the air bag (11) is sealed in the closed state by a folded material section (25) and/or a section of the module, wherein the material section (25) is preferably a component of the air bag covering.

7. Air bag module according to claim 6,
**characterized in that**
the material section (25) is unfoldable for release of the deflation opening (19), in particular by the gas pressure within the air bag (11), increasing with the inflation of the air bag (11).

8. Air bag module according to one of the preceding claims,
**characterized in that**
the deflation opening (19) of the air bag (11) is formed of a tube-, nozzle- or channel-like material section (25), which is connected at the one end with the air bag (11) and is open at the other end.

9. Air bag module according to one of the claims 6 to 8,
**characterized in that**
the material section (25) is provided at the module for anchoring, in particular by means of a preferably elongated anchorage element (27), preferably formed as band or cord.

10. Air bag module according to claim 9,
**characterized in that**
the anchorage of the material section (25) is releasable by activating the actuator (15).

11. Air bag module according to one of the claims 6 to 10,
**characterized in that**
the material section (25) and its anchorage is adapted such that unfolding of the material section (25) for release of the deflation opening (19) is possible only with released anchoring.

12. Air bag module according to one of the preceding claims,
**characterized in that**
an actuation or control member (23) is provided, movable by activating the actuator (15), which cooperates both with the bypass opening (17) and the deflation opening (19) of the air bag (11).

13. Air bag module according to one of the preceding claims,
**characterized in that**
the actuator (15) includes a piston/cylinder arrangement (23, 29).

14. Air bag module according to claim 13,
**characterized in that**
an ignitable propellant (31) is provided for the piston/cylinder arrangement (23, 29), that generates a gas expansion for moving the piston (23) by activating the actuator (15) in the cylinder (29),

15. Air bag module according to claim 13 or 14,
**characterized in that**
the movable piston (23), activated by the actuator (15), is adapted as an actuation or a control member both for the bypass opening (17) and for the deflation opening (19) of the air bag (11) or cooperates with the bypass opening (17) and the deflation opening (19) through an additional actuator.

16. Air bag module according to one of the preceding claims,
**characterized in that**
the actuator (15) can be activated alternatively before, during or after releasing of the gas generator (13).

17. Air bag module according to one of the preceding claims,
**characterized in that**
the actuator (15) is controllable independent of the gas generator (13).

18. Air bag module according to one of the preceding claims,
**characterized in that**
the actuator (15) can be automatically activated in a situation-dependent timing with releasing of the gas generator (13).

19. Air bag module according to claim 18,
**characterized in that**
the vehicle situation determining the activation of the actuator (15) can be determined automatically through a vehicle sensor technology.

20. Air bag module according to one of the preceding claims,
**characterized in that**
the inflation behavior and the deflation behavior of the air bag (11) can be influenced simultaneously by means of the actuator (15).

21. Method for the operation of an air bag module for automotive vehicles, comprising an air bag (11) inflatable through an air bag opening (55) and provided in the air bag covering, a gas generator (13) for inflating the air bag (11), and an actuable actuator (15) cooperating with a bypass opening (17) of the module and a deflation opening (19) of the air bag (11), arranged in the air bag covering and spaced apart from the air bag opening (55),
wherein the actuator (15) is activated alternatively before, during or after releasing of the gas generator (13), to change both the inflating behavior by means of the bypass opening (17) and the deflating behavior by means of the deflation opening (19) of the air bag (11) compared to an operation with an actuator (15) remaining passive.

22. Method according to claim 21,
**characterized in that**
the actuator (15) is automatically activated in a vehicle situation-dependent timing with releasing of the gas generator (13).

23. Method according to claim 22,
**characterized in that**
the vehicle situation determining the timing of activation of the actuator (15) in relation to the timing of releasing of the gas generator (13) is determined automatically through a vehicle sensor technology.

24. Method according to one of the claims 21 to 23,
**characterized in that**
the inflation behavior and deflation behavior of the air bag (11) are changed simultaneously.

25. Method according to one of the claims 21 to 24,
**characterized in that**
by activating the actuator (15) the bypass opening (17) of the module and the deflation opening (19) of the air bag are released.

## Revendications

1. Module d'airbag pour véhicule automobile, comprenant
un sac à air (11), gonflable à travers une ouverture de sac (55),
un générateur de gaz (13) pour gonfler le sac à air (11), et
un actionneur (15) susceptible d'être activé, qui coopère d'une part avec une ouverture de by-pass (17) du module et d'autre part avec une ouverture d'évacuation (19) du sac à air (11) de telle façon qu'après l'activation de l'actionneur (15) il est possible de modifier aussi bien le comportement de gonflage su sac à air au moyen de l'ouverture de by-pass (17) que le comportement d'évacuation du sac à air (11) au moyen de l'ouverture d'évacuation (19) par rapport à un fonctionnement avec un actionneur (15) restant passif, et l'ouverture d'évacuation (19) ainsi que l'embouchure de sac (55), agencée à distance de celle-ci, du sac à air (11) sont réalisées dans l'enveloppe du sac à air.

2. Module d'airbag selon la revendication 1,
**caractérisé en ce que**, au moyen de l'actionneur (15), l'ouverture de by-pass (17) et l'ouverture d'évacuation (19) peuvent être passées depuis une situation fermée vers une situation libérée.

3. Module d'airbag selon la revendication 1 ou 2,
**caractérisé en ce qu'**il est prévu un élément d'obturation (21) pour l'ouverture de by-pass (17), qui peut être passé au moyen de l'actionneur (15) depuis une situation qui referme l'ouverture de by-pass (17) jusque dans une situation de libération dans laquelle le gaz généré par déclenchement du générateur à gaz (13) peut s'échapper via l'ouverture de by-pass (17) en surmontant l'élément d'obturation (21).

4. Module d'airbag selon la revendication 3,
**caractérisé en ce que** l'élément d'obturation (21) est monté mobile et, après libération par l'actionneur (15), il est en mesure d'effectuer un mouvement d'ouverture, ledit mouvement d'ouverture englobant de préférence un mouvement de pivotement, de rotation ou de translation, ou en ce que l'élément d'obturation (21) est totalement détaché du module dans la situation de libération.

5. Module d'airbag selon la revendication 3 ou 4,
**caractérisé en ce que,** dans une situation qui obture l'ouverture de by-pass (17), l'élément d'obturation (21) est empêché d'effectuer un mouvement d'ouverture au moyen d'un verrou, ledit verrou (23) étant déplaçable au moyen de l'actionneur (15) hors d'une position de verrouillage jusque dans une position de déverrouillage qui libère l'élément d'obturation (21).

6. Module d'airbag selon l'une des revendications précédentes,
**caractérisé en ce que,** dans la situation fermée, l'ouverture d'évacuation (19) du sac à air (11) est obturée par un tronçon de matériau (25) replié et/ou par un tronçon du module, et le tronçon de matériau (25) est de préférence un composant de l'enveloppe du sac à air.

7. Module d'airbag selon la revendication 6,
**caractérisé en ce que** le tronçon de matériau (25) est déployable pour libérer l'ouverture d'évacuation (19), en particulier sous l'effet de la pression du gaz, qui augmente lors du gonflage du sac à air (11), à l'intérieur du sac à air (11).

8. Module d'airbag selon l'une des revendications précédentes,
**caractérisé en ce que** l'ouverture d'évacuation (19) du sac à air (11) est formée par un tronçon de matériau (25) analogue à un tuyau, à une trompe ou à un canal, qui communique à une extrémité avec le sac à air (11) et qui est ouvert à l'autre extrémité.

9. Module d'airbag selon l'une des revendications 6 à 8,
**caractérisé en ce que** le tronçon de matériau (25) est réalisé pour un ancrage sur le module, en particulier au moyen d'un élément d'ancrage (27) de préférence allongé, réalisé de préférence sous forme de bande ou de cordon.

10. Module d'airbag selon la revendication 9,
**caractérisé en ce que** l'ancrage du tronçon de matériau (25) peut être déclenché par activation de l'actionneur (15).

11. Module d'airbag selon l'une des revendications 6 à 10,
**caractérisé en ce que** le tronçon de matériau (25) et son ancrage sont réalisés de telle façon qu'un déploiement du tronçon de matériau (25) pour libérer l'ouverture d'évacuation (19) est possible uniquement lorsque l'ancrage est libéré.

12. Module d'airbag selon l'une des revendications précédentes,
**caractérisé en ce qu'**il est prévu un organe d'actionnement ou de commande (23) déplaçable par activation de l'actionneur (15), qui coopère aussi bien avec l'ouverture de by-pass (17) qu'avec l'ouverture d'évacuation (19) du sac à air (11).

13. Module d'airbag selon l'une des revendications précédentes,
**caractérisé en ce que** l'actionneur (15) comprend un agencement à piston-et-cylindre (23, 29).

14. Module d'airbag selon la revendication 13,
**caractérisé en ce qu'**il est prévu un groupe propulseur amorçable (31) pour l'agencement à piston-et-cylindre (23, 29), qui génère, par activation de l'actionneur (15) une expansion de gaz dans le cylindre (29) pour déplacer le piston (23).

15. Module d'airbag selon la revendication 13 ou 14,
**caractérisé en ce que** le piston (23) déplaçable par activation de l'actionneur (15) est réalisé sous forme d'un organe d'actionnement ou de commande aussi bien pour l'ouverture de by-pass (17) que pour l'ouverture d'évacuation (19) du sac à air (11), ou coopère via un organe d'actionnement additionnel avec l'ouverture de by-pass (17) et avec l'ouverture d'évacuation (19).

16. Module d'airbag selon l'une des revendications précédentes,
**caractérisé en ce que** l'actionneur (15) est susceptible d'être activé au choix avant, conjointement, ou après le déclenchement du générateur de gaz (13).

17. Module d'airbag selon l'une des revendications précédentes,
**caractérisé en ce que** l'actionneur (15) peut être piloté indépendamment du générateur de gaz (13).

18. Module d'airbag selon l'une des revendications précédentes,
**caractérisé en ce que** l'actionneur (15) est susceptible d'être activé automatiquement dans un ajustement temporel, fonction de la situation, avec le déclenchement du générateur de gaz (13).

19. Module d'airbag selon la revendication 18,
**caractérisé en ce que** la situation du véhicule qui détermine l'activation de l'actionneur (15) est susceptible d'être déterminé automatiquement via un système de capteurs du véhicule.

20. Module d'airbag selon l'une des revendications précédentes,
**caractérisé en ce que** le comportement de gonflage et le comportement d'évacuation du sac à air (11) peuvent être simultanément influencés au moyen de l'actionneur (15).

21. Procédé pour le fonctionnement d'un module d'airbag pour véhicule automobile, qui comprend un sac à air (11) susceptible d'être gonflé à travers une embouchure de sac (55) réalisée dans l'enveloppe du sac, un générateur de gaz (13) pour gonfler le sac à air (11), et un actionneur (15) susceptible d'être activé, qui coopère avec une ouverture de by-pass (17) du module et avec une ouverture d'évacuation (19), réalisée dans l'enveloppe du sac et à distance de l'embouchure du sac (55), dans le sac à air (11),
dans lequel l'actionneur (15) est activé au choix avant, conjointement ou après le déclenchement du générateur de gaz (13) afin de modifier aussi bien le comportement de gonflage du sac à air (11) au moyen de l'ouverture de by-pass (17) que le comportement d'évacuation du sac à air (11) au moyen de l'ouverture d'évacuation (19), par rapport à un fonctionnement avec un actionneur (15) restant passif.

22. Procédé selon la revendication 21,
**caractérisé en ce que** l'actionneur (15) est activé automatiquement avec le déclenchement du générateur de gaz (13) dans un ajustement temporel qui dépend de la situation respective du véhicule.

23. Procédé selon la revendication 22,
**caractérisé en ce que** la situation du véhicule par laquelle est déterminé l'instant de l'activation de l'actionneur (15), par référence à l'instant du déclenchement du générateur de gaz (13), est déterminée automatiquement au moyen d'un système de capteurs du véhicule.

24. Procédé selon l'une des revendications 21 à 23,
**caractérisé en ce que** le comportement de gonflage et le comportement d'évacuation du sac à air (11) sont modifiés simultanément.

25. Procédé selon l'une des revendications 21 à 24,
**caractérisé en ce que,** par activation de l'actionneur (15), l'ouverture de by-pass (17) du module et l'ouverture d'évacuation (19) du sac à air (11) sont libérées.
